# EUROPÄISCHE PATENTSCHRIFT

(11) **EP 3 013 621 B1**
(45) Veröffentlichungstag und Bekanntmachung des Hinweises auf die Patenterteilung: **18.10.2017**
(21) Anmeldenummer: 14736618.1
(22) Anmeldetag: 25.06.2014
(51) Int. Cl.: B60K 37/06, G06F 3/01

(54) **KRAFTFAHRZEUG-BEDIENSCHNITTSTELLE MIT GESTENERKENNUNG**
MOTOR VEHICLE CONTROL INTERFACE WITH GESTURE RECOGNITION
INTERFACE DE COMMANDE DE VÉHICULE AUTOMOBILE À RECONNAISSANCE DE GESTES

(30) Priorität: 29.06.2013 DE 102013010932
(43) Veröffentlichungstag der Anmeldung: 04.05.2016
(73) Patentinhaber: Audi AG, 85045 Ingolstadt (DE)
(72) Erfinder: SCHLITTENBAUER, Michael, 85055 Ingolstadt (DE); ROEHDER, Martin, D-85049 Ingolstadt (DE); KÜHNE, Marcus, 92339 Beilngries (DE); BOHRER, Lorenz, 80333 München (DE)
(74) Vertreter: Brandt, Kai
(86) Internationale Anmeldenummer: PCT/EP2014/001726
(87) Internationale Veröffentlichungsnummer: WO 2014/206558

(56) Entgegenhaltungen:
- DE-A1- 10 233 233
- DE-A1- 10 349 568

## Beschreibung

Die Erfindung betrifft eine Kraftfahrzeug-Bedienschnittstelle, mittels welcher eine Person durch Gestikulieren eines oder mehrere Geräte in einem Kraftfahrzeug bedienen kann, also beispielsweise ein Infotainmentsystem und/oder eine Klimaanlage. Die Person kann die Gesten mit zumindest einem Arm ausführen. Eine Geste wird optisch erkannt, indem sie durch ein Kamerasystem gefilmt wird und dann durch eine Erkennungseinrichtung einer aus mehreren vorbestimmten Bediengesten durch eine Klassifizierung zugeordnet wird.

Eine Bedienschnittstelle der genannten Art ist beispielsweise aus der gattungsbildenden DE 103 49 568 A1 bekannt. Danach wird eine Hand einer Bedienperson in einem Kraftfahrzeug von einem Kamerasystem gefilmt, das in einer Decke des Fahrzeuginnenraums über einer Mittelkonsole des Kraftfahrzeugs angeordnet ist. Wenn eine Person ihre Hand über die Mittelkonsole hält und eine vorbestimmte Stellung mit der Hand einnimmt oder eine vorbestimmte Handbewegung macht, wird dies durch eine mit dem Kamerasystem gekoppelte Erkennungseinrichtung erkannt und ein entsprechender Steuerbefehl an beispielsweise ein Radio des Kraftfahrzeugs ausgegeben, so dass die Person mit ihrer Bediengeste beispielsweise eine Abspiellautstärke einstellen kann. Problematisch hat sich bei der Gestenerkennung in einem Kraftfahrzeug erwiesen, dass eine Person häufig auch aus anderen Gründen ihre Hand im Bereich über der Mittelkonsole hält und dort mit der Hand gestikuliert. Unterhält sich beispielsweise ein Fahrer mit einem anderen Passagier und lehnt dabei seinen Arm auf eine Armlehne der Mittelkonsole, so befindet sich seine Hand ebenfalls in dem Erfassungsbereich des Kamerasystems. Führt er dann eine nicht für die Bedienung des Kraftfahrzeugs bestimmte Geste mit der Hand aus, weil er beispielsweise gerade etwas erklärt und hierbei gestikuliert, so wird auch diese eigentlich zu ignorierende Geste von dem Kamerasystem gefilmt und durch das Erkennungssystem interpretiert. So kann es sein, dass während des Gesprächs Einstellungen von Geräten verändert werden, ohne dass der Fahrer dies beabsichtigte.

Aus der DE 10 2006 037 156 1A1 ist eine Bedienschnittstelle für ein Kraftfahrzeug beschrieben, bei welcher mittels Bediengesten auf einem Touchscreen (berührungsempfindlicher Bildschirm) grafische Inhalte verändert werden und hierbei an die Fingerstellung angepasst werden. So kann beispielsweise ein herannahender Finger erkannt werden und dies als bevorstehende Bediengeste auf dem Touchscreen interpretiert werden. Entsprechend kann dann beispielsweise ein Buchstabe oder ein Menüeintrag vergrößert dargestellt werden, so dass die Bedienperson diesen dann einfacher mit der Fingerspitze treffen kann. Bei diesem System kann also durch eine eigentlich zu ignorierende Geste versehentlich nur die Darstellung auf dem Bildschirm verändert werden, ohne dass aber versehentlich ein Steuerbefehl an ein Gerät erzeugt wird. Dieser wird nur bei tatsächlichem Berühren des Touchscreens erzeugt. Nachteilig ist hierbei aber, dass der Fahrer zum Antippen, der richtigen Funktion auf dem Bildschirm seinen Blick vom Verkehrsgeschehen abwenden muss, um Buchstaben oder Menüeinträge anpeilen zu können.

Aus der DE 10 2006 009 291 A1 ist eine Bedienschnittstelle eines Kraftfahrzeugs bekannt, die eine Gestenerkennungseinrichtung aufweist, welche 3D-Bilddaten verarbeitet. Hierzu weist ein vorgeschaltetes Kamerasystem eine Time-of-Flight-Kamera auf. Es kann zum Erzeugen der 3D-Bilddaten auch eine Stereokamera vorgesehen sein.

Der Erfindung liegt die Aufgabe zugrunde, in einem Kraftfahrzeug eine robuste Gestenerkennung bereitzustellen, die für den Fall, dass eine Person unbeabsichtigt in einem Erfassungsbereich des Gestenerkennungssystems gestikuliert, keine Steuerbefehle erzeugt.

Die Aufgabe wird durch ein Verfahren gemäß Patentanspruch 1, einer Bedienschnittstelle gemäß Patentanspruch 14 und ein Kraftfahrzeug gemäß Patentanspruch 15 gelöst. Vorteilhafte Weiterbildungen der Erfindung sind durch die Unteransprüche gegeben.

Die Erfindung löst die Aufgabe durch eine doppelte Gestenerkennung. Die erste Gestenerkennung basiert dabei auf dem aus dem Stand der Technik bekannten Ansatz, durch ein Kamerasystem eine im Fahrzeuginnenraum des Kraftfahrzeugs mit zumindest einem Arm gestikulierende Person zu filmen und durch eine Erkennungseinrichtung die gefilmte Geste auszuwerten. Die Erkennungseinrichtung kann beispielsweise ein Programmmodul einer zentralen Recheneinrichtung oder eines Infotainmentsystems des Kraftfahrzeugs umfassen. Mit "Arm" ist die Gliedmaße inklusive der Hand gemeint, wobei das Gestikulieren auf einen Teil eines Arms, z.B. die Hand oder einen oder mehrere Finger, beschränkt sein kann.

Die Auswertung erfolgt, indem auf der Grundlage von Bilddaten des Kamerasystems Beschreibungsdaten zu einer Stellung und/oder einer Bewegungsabfolge des zumindest einen gestikulierenden Arms ermittelt werden, also Daten, die beispielsweise die Position der Hand und die Stellung der Finger beschreiben. Diese Beschreibungsdaten werden dann einer aus mehreren vorbestimmten Bediengesten zugeordnet. Es wird also z.B. ermittelt, welcher der zulässigen Bediengesten die gefilmte Geste am ähnlichsten ist. Die Zuordnung erfolgt in Form einer ersten Klassifizierung, wie sie beispielsweise mittels eines Hidden-Markov-Modells oder einem anderen, aus dem Bereich der automatischen Erkennung bekannten Ansatz realisiert werden kann.

Da diese erste Erkennung ungeprüft aus allen Bilddaten einer gefilmten Geste entsprechende Beschreibungsdaten extrahiert und diese einer Bediengeste zuordnet, kann es zu den beschriebenen Falscherkennungen kommen. Ob eine Bediengeste von der Bedienperson auch so gemeint war oder beispielsweise nur zufällig während des Gestikulierens bei einem Gespräch mit einer anderen Person ausgeführt wurde, also nur eine Kommunikationsgeste war, wird durch die erste Erkennung nicht geprüft.

Die Erfindung sieht nun deshalb eine zweite, einfachere Erkennung vor, die zunächst einmal nur entscheidet, ob die Person überhaupt eine der möglichen Bediengesten ausführen wollte oder nur eine nicht für die Bedienung bestimmte, das heißt zu ignorierende Geste ausgeführt hat. Diese zweite Erkennungseinrichtung wird hier als Plausibilisierungseinrichtung der Bedienschnittstelle bezeichnet, weil sie ermittelt, ob es überhaupt plausibel ist, dass die Bedienperson eine für die Bedienung bestimmte Bediengeste ausführen wollte. Die Plausibilisierungseinrichtung kann ebenfalls beispielsweise ein Programmmodul der zentralen Recheneinrichtung oder des Infotainmentsystems sein. Die Plausibilisierungseinrichtung ermittelt zumindest einen Situationsparameter, welcher einen Gestikulationskontext der Person beschreibt, also den zeitlichen und räumlichen Kontext, in welchem die Person eine Geste ausgeführt hat.

Ein solcher Situationsparameter kann beispielsweise ebenfalls aus den Bilddaten gewonnen werden und angeben, welche Körperhaltung die Person überhaupt eingenommen hat. Beugt sich beispielsweise die Person gerade unter einen Fahrzeugsitz, weil sie dort etwas verloren hat, und stützt sich dabei mit der Hand auf der Mittelkonsole ab, so mag die Hand allein zwar eine Stellung innehaben, wie sie auch einer der möglichen Bediengesten entspricht. Aus der Stellung des Ellenbogens und der Position des Kopfes geht aber klar hervor, dass die Person gerade keinen Bedienwunsch hat und deshalb die Geste zu ignorieren ist.

Der Situationsparameter kann aber auch aus anderen Daten als den Bilddaten gewonnen werden. Beispielsweise kann überprüft werden, ob sich gerade die Person mit einer anderen Person in einem Gespräch befindet. Dies kann beispielsweise aus Audiodaten ermittelt werden. Spricht gerade die gestikulierende Person, so ist es sehr wahrscheinlich, dass ihre Gesten Kommunikationsgesten sind, die dem Gesagten Ausdruck verleihen sollen. Solche Kommunikationsgesten sollten nicht als Bediengesten interpretiert, sondern ignoriert werden.

Entscheidet nun die Plausibilisierungseinrichtung anhand des zumindest einen Situationsparameters, dass ein derartiger Gestikulationskontext vorliegt, welcher für eine mögliche Bediengeste spricht, so wird in Abhängigkeit von der Bediengeste, die durch die (oben beschriebene) erste Klassifizierung erkannten wird, auch tatsächlich ein Steuerbefehl an ein zu bedienendes Gerät im Kraftfahrzeug ausgegeben.

Bei Entscheidung auf eine zu ignorierende Geste wird dagegen das Ausgeben des Steuerbefehls unterdrückt. Das Unterdrücken kann in unterschiedlicher Weise erfolgen. Ist die Plausibilisierungseinrichtung beispielsweise der eigentlichen Gestenerkennungseinrichtung vorgeschaltet, so kann beispielsweise die Gestenerkennungseinrichtung ganz deaktiviert werden. Ist die Plausibilisierungseinrichtung dagegen zeitgleich mit der Gestenerkennungseinrichtung aktiv oder dieser nachgeschaltet, so kann das Ergebnis der ersten Klassifizierung, also das Erkennungsergebnis der Gestenerkennungseinrichtung, einfach verworfen werden.

Die Plausibilisierungseinrichtung selbst erkennt also nicht die einzelnen vorgesehenen Bediengesten, sondern entscheidet nur, ob überhaupt eine mögliche Bediengeste vorliegt oder aber eine zu ignorierende Geste. Mit anderen Worten ermittelt die Plausibilisierungseinrichtung, ob gerade ein Bedienkontext vorliegt, in welchem die Person der Gestenerkennungseinrichtung überhaupt einen Bedienwunsch mittels ihrer Geste mitteilen möchte. Das Bereitstellen einer Plausibilisierungseinrichtung weist damit den weiteren Vorteil auf, dass die von ihr durchgeführte zweite Klassifizierung, also die Entscheidung, ob eine mögliche Bediengeste vorliegt oder eine zu ignorierende Geste, lediglich binär ist und damit sehr robust. Die Menge der ermittelten Situationsparameter muss lediglich einer von zwei Möglichkeiten zugeordnet werden.

Die erfindungsgemäße Bedienschnittstelle umfasst die Komponenten, welche zum Ausführen des erfindungsgemäßen Verfahrens nötig sind, also ein Kamerasystem und eine mit dem Kamerasystem gekoppelte Auswerteeinrichtung, die in der beschriebenen Weise eine Gestenerkennungseinrichtung und eine Plausibilisierungseinrichtung aufweist.

Das ebenfalls zur Erfindung gehörige Kraftfahrzeug zeichnet sich dadurch aus, dass es eine Ausführungsform der erfindungsgemäßen Bedienschnittstelle aufweist. Beispielsweise kann die Bedienschnittstelle als Bestandteil eines Infotainmentsystems des Kraftfahrzeugs bereitgestellt sein und für die Bedienung beispielsweise der Geräte des Infotainmentsystems, wie eines Navigationsgeräts, eines Medienabspielgerät (wie beispielsweise CD-Abspielgeräts, Blu-Ray-Abspielgeräts oder DVD-Abspielgeräts), einer Klimaanlagensteuerung. Das erfindungsgemäße Kraftfahrzeug ist bevorzugt als Kraftwagen, insbesondere als Personenkraftwagen, ausgestaltet.

Bei der Erfindung ergeben sich unterschiedliche Ausgestaltungen dadurch, wie die Plausibilisierungseinrichtung zwischen einerseits einer möglichen Bediengeste und andererseits einer zu ignorierenden Geste unterscheidet.

Eine Ausführungsform sieht vor, dass der zumindest eine Situationsparameter des Gestikulationskontextes eine jeweilige Geschwindigkeit zumindest eines beweglichen Teils und/oder Gelenks des zumindest einen Arms umfasst. Erfasst also beispielsweise die eigentliche Gestenerkennungseinrichtung in einem einzelnen Kamerabild eine Hand der Bedienperson in einer Handstellung, die einer Bediengeste entspricht, so würde die Gestenerkennungseinrichtung entsprechend dieser erkannten Bediengeste einen Steuerbefehl für ein Gerät erzeugen. Wird aber hierbei durch die Plausibilisierungseinrichtung erkannt, dass die Hand während der Bildaufnahme mit einer bestimmten Geschwindigkeit durch den Erfassungsbereich des Kamerasystems hindurch bewegt wurde, also beispielsweise quer über die Mittelkonsole geschwenkt wurde, so ist dieser Gestikulationskontext ein Hinweis darauf, dass die Person offenbar nicht mit ihrer Hand eine für die Bedienschnittstelle bestimmte Bediengeste ausführen wollte, sondern die Hand nur zufällig durch den Erfassungsbereich schwenkte. Entsprechend wird also durch die Plausibilisierungseinrichtung auf eine Bediengeste nur entschieden, wenn jeder der ermittelten Geschwindigkeitswerte der einzelnen Teile und/oder Gelenke innerhalb eines jeweils vorbestimmten Geschwindigkeitsbereichs liegt. Insbesondere muss jeder Geschwindigkeitswert kleiner als ein vorbestimmter Höchstgeschwindigkeitswert sein.

Eine weitere Möglichkeit, eine Falscherkennung zu vermeiden, besteht darin, dass der zumindest eine Situationsparameter des Gestikulationskontexts eine jeweilige Beschleunigung zumindest eines beweglichen Teils und/oder Gelenks des zumindest einen gestikulierenden Arms umfasst. Hält beispielsweise die Bedienperson ihre Hand in dem Erfassungsbereich des Kamerasystems zunächst still, hebt sie die Hand dann aber beispielsweise hoch, um nach etwas zu greifen, so kann sie hierbei versehentlich wieder eine Fingerstellung einnehmen, welche einer der vorbestimmten Bediengesten entspricht. Die Erkennungseinrichtung würde also hier wieder mit der Erzeugung eines Steuerbefehls reagieren. Wird aber durch die Plausibilisierungseinrichtung erkannt, dass während dieses Erkennungsvorgangs die Hand stark beschleunigt wurde, so ist dies wieder ein Indiz, dass die Geste nicht als ein Bedienwunsch aufzufassen ist. Entsprechend wird durch die Plausibilisierungseinrichtung auf die Bediengeste nur entschieden, falls jede zu den einzelnen Teilen und Gelenken erfasste Beschleunigung innerhalb eines jeweils vorbestimmten Beschleunigungswertebereichs liegt. Insbesondere muss jeder Beschleunigungswert kleiner als ein vorbestimmter Höchstbeschleunigungswert sein.

Die beschriebenen Geschwindigkeitswertebereiche und Beschleunigungswertebereiche können beispielsweise ermittelt werden, indem Testpersonen beobachtet werden und so geeignete Werteintervalle anhand ihres Verhaltens ermittelt werden.

Eine spezielle Situation ergibt sich, wenn ein bewegliches Teil und/oder Gelenk des zumindest einen gestikulierenden Arms so schnell bewegt wird, dass weder eine Geschwindigkeits-, noch eine Beschleunigungsmessung möglich ist, weil nicht genug Kamerabilder von der Bewegung erzeugt werden. Gemäß einer Ausführungsform wird als ein Situationsparameter eine Größe erfasst, die angibt, ob das Teil beziehungsweise das Gelenk mit einem Ruck bewegt worden ist. Hierzu kann beispielsweise ermittelt werden, ob in zwei aufeinanderfolgenden Kamerabildern des Kamerasystems eine Positionsänderung innerhalb einer vorbestimmten Zeit größer als eine vorbestimmte Höchststrecke ist. Ist dies der Fall, so hat sich die Person mit ihrem zumindest eine gestikulierenden Arm offenbar ruckartig bewegt, und für diesen Fall wird auf eine zu ignorierende Geste entschieden.

Wie bereits beschrieben wurde, ist es sehr unwahrscheinlich, dass eine sich unter einen Fahrzeugsitz bückende Person gerade eine Bediengeste ausführen möchte. Diese und weitere Situationen können gemäß einer Ausführungsform erkannt werden, indem der zumindest eine Situationsparameter des Gestikulationskontexts einen jeweiligen relativen Winkel zumindest eines beweglichen Teils und/oder Gelenks zu zumindest einem anderen beweglichen Teil und/oder Gelenk umfasst. Es wird also die relative Stellung einzelner Bereiche des zumindest einen gestikulierenden Arms oder auch anderer Körperteile überprüft. Beispielsweise kann also überprüft werden, ob ein Ellenbogen einen normalen, bei der Bedienung einer Bedienschnittstelle zu erwartenden Beugewinkel aufweist oder beispielsweise zu einem spitzen Winkel von z.B. weniger als 40° gebeugt ist. Auf eine Bediengeste wird durch die Plausibilisierungseinrichtung dabei nur dann entschieden, falls jeder überwachte relative Winkel innerhalb eines jeweils vorbestimmten Winkelwertebereichs liegt. Auch hier können wieder geeignete Winkelwertebereiche durch Beobachten von Testpersonen in unterschiedlichen Situationen ermittelt werden.

Ähnlich wie bei der Beobachtung relativer Winkel kann auch ein wertvoller Hinweis auf den Gestikulationskontext anhand der Ortung von beweglichen Teilen und/oder Gelenken erlangt werden, die nicht direkt an der eigentlichen, zu erkennenden Bediengeste beteiligt sind. Wird durch eine Hand beispielsweise gerade eine der Bediengesten ausgeführt, ist also beispielsweise in den Bilddaten eine flache Hand mit gespreizten Fingern zu erkennen, und geht hierbei aber aus den Situationsparametern hervor, dass der Ellenbogen sich senkrecht über dem Handgelenk befindet, so scheint sich die Person offenbar auf ihre Hand aufzustützen, wie es bei der oben beschriebenen Szene der Fall sein könnte, wenn sich die Person gerade unter einen Fahrersitz beugt. Durch die Plausibilisierungseinrichtung wird entsprechend bei dem Auswerten der Orte auf eine Bediengeste nur entschieden, falls jeder Ort innerhalb eines jeweils vorbestimmten Raumbereichs liegt. Hierdurch können insbesondere eine oder mehrere Standard-Körperhaltungen für die Bedienung der Bedienschnittstelle vorgegeben werden. Zur Plausibilisierung eines Erkennungsergebnisses, das heißt um zu verhindern, dass ein Steuerbefehl aufgrund einer eigentlich mangels Bedienwunsches zu ignorierenden Geste unnötigerweise ausgegeben wird, kann zum Beispiel anhand eines solchen Körpermodells zusätzlich überprüft werden, ob der Fahrer eine für die Bedienung ungewöhnliche Schulterstellung eingenommen hat. Hierzu können Parameter des Körpermodells daraufhin überprüft werden, ob ihre Parameterwerte in vorbestimmten Intervallen liegen. Welche Intervalle für die einzelnen Parameterwerte sinnvoll sind, kann durch Beobachten von Testpersonen beim Konfigurieren der Plausibilisierungseinrichtung ermittelt werden.

Eine Ausführungsform des erfindungsgemäßen Verfahrens sieht hierzu vor, in die Bilddaten ein Körpermodell von zumindest einem Teil der Person einzupassen und anhand des Körpermodells zu verifizieren, ob die Person eine Körperstellung eingenommen hat, welche auf einen Bedienwunsch hinweist. Beispielsweise kann also die Schulterstellung überprüft werden, die Ausrichtung des Kopfes, die Lage des Ellenbogens und/oder des Oberarms, eine Sitzhaltung des Beckens auf dem Fahrzeugsitz. Das Erzeugen eines Körpermodells und automatisierte Einpassen in Bilddaten kann beispielsweise mit der Funktionsbibliothek "Kinect" des Unternehmens Microsoft realisiert werden.

Einpassen eines Köpermodells in Bilddaten bedeutet insbesondere, dass Parameter des Körpermodells in der Weise mit Parameterwerten eingestellt werden, dass das Körpermodell mit der durch die Bilddaten dargestellten Form und/oder Haltung bis zu einem vorbestimmten Fehlergrad übereinstimmt. Solche Parameter geben zu einzelnen Elementen des Körpermodells einen aktuellen Wert einer Eigenschaft dieses Elements an. Beispielsweise kann zu einem Gelenk dessen Bewegungswinkel angegeben werden, zu einem starren Körperteil dessen Ausrichtung im Raum oder ein Bewegungsvektor seiner aktuellen Bewegung. Für das Plausibilisieren der Körperstellung können die Parameter des Körpermodells ebenfalls ausgewertet werden. Für zumindest einen Parameter des Körpermodells wird in diesem Fall überprüft, ob sein Parameterwert einen vorbestimmten Wert aufweist oder in einem vorbestimmten Werteintervall liegt.

Gemäß einer weiteren Ausführungsform des erfindungsgemäßen Verfahrens wird zum Verifizieren der Körperstellung für mehrere Parameter des Körpermodells jeweils durch ein statistisches Modell dem jeweiligen aktuellen Parameterwert jedes Parameters ein Wahrscheinlichkeitswert betreffend einen Bedienwunsch der Person zugeordnet und dann auf Grundlage der Wahrscheinlichkeitswerte aller überprüfter Parameter eine Gesamtwahrscheinlichkeit für den Bedienwunsch ermittelt, bei dessen Vorliegen dann also auf eine mögliche Bediengeste zu entscheiden ist. Das Auslösesignal wird dabei dann erzeugt, wenn die Gesamtwahrscheinlichkeit größer als ein vorbestimmter Mindestwert ist. Das genannte statistische Modell für einen Parameter kann beispielsweise ein Gaußmodell oder ein Gaußmixtur-Modell umfassen. Es kann also beispielsweise für einen Beugewinkel des Ellenbogens und einen Knickwinkel eines Handgelenks jeweils zum aktuellen Parameterwert mittels des statistischen Modells eine Aussage gemacht werden, wie wahrscheinlich der aktuelle Winkel auf einen Bedienwunsch hinweist. Kombiniert man dann zu mehreren solchen Parametern die einzelnen Wahrscheinlichkeitswerte, so kann mit großer Zuverlässigkeit anhand der Gesamtwahrscheinlichkeit erkannt werden, ob die aktuelle Körperhaltung tatsächlich auf einen Bedienwunsch hinweist. Die statistischen Modelle lassen sich beispielsweise durch Trainingsphasen konfigurieren oder parametrieren, in denen Testpersonen mit dem optischen Sensor der Überwachungseinrichtung beobachtet werden und die Konfigurationsparameter der statistischen Modelle an die Trainingsdaten angepasst werden. Um auch zeitliche Abläufe statistisch modellieren zu können, also nicht nur einen aktuellen Parameterwert, sondern auch eine Folge mehrerer Parameterwerte jedes Parameters, können Hidden-Markov-Modelle zum Modellieren der zeitlichen Abläufe zugrunde gelegt werden.

Gut geeignet für die Plausibilisierung ist auch die Bewegungshistorie des zumindest einen gestikulierenden Arms. Liegt beispielsweise wieder die beschriebene Gesprächssituation vor, während welcher eine Bedienperson Kommunikationsgesten ausführt, um dem Gesagten Nachdruck zu verleihen, nicht aber um tatsächlich die Bedienschnittstelle zu bedienen, so wird die Person also über einen längeren Zeitraum hinweg und auch außerhalb des Erfassungsbereichs der Gestenerkennungseinrichtung energisch gestikulieren. Befindet sich die Hand dann doch einmal innerhalb des Erfassungsbereichs und gestikuliert dort weiter, so kann aufgrund der Bewegungshistorie erkannt werden, dass die Person hier nur zu ignorierende Gesten ausführt. Man kann nun beispielsweise zunächst eine vorbestimmte Mindestaufenthaltszeit abwarten, bevor die in dem für die Erkennung vorgesehenen Raumvolumen ausgeführten Gesten durch die Gestenerkennungseinrichtung als Bediengesten interpretiert werden. Entsprechend sieht eine Ausführungsform der Erfindung vor, dass durch die Plausibilisierungseinrichtung aus einer anhand der Bilddaten ermittelten Bewegungshistorie, welche zeitlich vor einem Bewegungsablauf stattgefunden hat, der für die Klassifizierung der Geste berücksichtigt wird, überprüft wird, ob überhaupt eine Bediensituation vorliegt. Nur für diesen Fall wird dann durch die Plausibilierungseinrichtung auf Vorliegen einer Bediengeste entschieden. Beispielsweise kann anhand der Bilddaten die Bewegungstrajektorie von Gelenken oder anderen Teilen des zumindest einen gestikulierenden Arms überwacht werden. Weisen die Aufenthaltsorte der einzelnen, überwachten Bereiche des Arms eine große Varianz auf, weil die Person mit den Armen fuchtelt, sie wahllos schwenkt oder anderweitig beispielsweise im Rahmen eines Gesprächs bewegt, so kann beispielsweise vorgesehen sein, bei größerer Varianz eine entsprechend größere Mindestaufenthaltszeit im Erfassungsbereich des Gestenerkennungseinrichtung vorzusehen. Erst wenn diese Mindestaufenthaltszeit überschritten ist, wird dann durch die Gestenerkennungseinrichtung eine dann erkannte Geste, also eine Stellung beispielsweise der Hand oder eine Bewegungsabfolge der Hand, durch die Klassifizierung einer der möglichen Bediengesten zugeordnet. Die Ortung kann über das beschriebene Körpermodell erfolgen.

Aufgrund der Robustheit, die mit der zweistufigen Erkennung durch die Plausibilisierungseinrichtung einerseits und die Gestenerkennungseinrichtung andererseits erreicht werden kann, ist es bei der erfindungsgemäßen Bedienschnittstelle sogar möglich, auf die aus dem Stand der Technik typische Gestenaktivierungstaste zu verzichten. Durch die Plausibilisierungseinrichtung wird dieselbe Funktion wie eine Gestenaktivierungstaste realisiert, indem nämlich das Erzeugen eines Steuerbefehls auf eine Geste hin nur dann erfolgt, wenn sich auch der entsprechende Gestikulationskontext anhand des zumindest einen Situationsparameters ergibt. Mit anderen Worten wird also das Ausgeben des Steuerbefehls nach dem Starten des Kraftfahrzeugs unabhängig von einer weiteren Betätigung einer dedizierten, jeweils einen einzelnen Erkennungsvorgang auslösende Gestenaktivierungstaste erzeugt. Die einzelnen Erkennungsvorgänge werden durch die Plausibilisierungseinrichtung eingeteilt.

Wie bereits ausgeführt, kann das Unterdrücken des Steuerbefehls durch die Plausibilisierungseinrichtung entweder durch Deaktivierung der Gestenerkennungseinrichtung oder durch Verwerfen der Ausgabe der Gestenerkennungseinrichtung erfolgen. Eine andere vorteilhafte Weiterbildung ergibt sich, wenn gezielt nur ein bestimmter Steuerbefehl durch die Plausibilisierungseinrichtung unterdrückt wird, andere dagegen zugelassen werden. Telefoniert beispielsweise eine Person in dem Kraftfahrzeug und spricht sie dabei selber oder redet gerade der Gesprächspartner am anderen Ende der Leitung, so wird bevorzugt für diese Zeiträume (aktiver Sprecher) bevorzugt die Bediengeste zum Auflegen, also zum Unterbrechen des Telefonats, aus der Gestenerkennung ausgenommen. So ist in vorteilhafter Weise vermeiden, dass versehentlich ein Telefonat unterbrochen wird, weil in dem Kraftfahrzeug eine Person die entsprechende Geste zufällig beim Gestikulieren während des Sprechens oder Zuhörens ausgeführt hat. Es wird hierzu diejenige Bediengeste, die zum Auslösen des zu unterdrückenden Steuerbefehls ausgeführt werden muss, einfach aus der ersten Klassifizierung ausgenommen.

Um den Gestikulationskontext anhand der Bilddaten zuverlässig erkennen zu können, sieht eine vorteilhafte Weiterbildung vor, die Bilddaten durch eine Stereokamera und/oder eine PMD-Kamera zu ermitteln (PMD - Photonic-Mixing-Device, auch Time-of-Flight-Kamera genannt). Die Bilddaten stellen dann dreidimensionale Informationen dar, beispielsweise Raumkoordinaten von einzelnen Flächenabschnitten des zumindest einen gestikulierenden Arms. Es sind also nicht nur flächige, zweidimensionale Farbintensitätsinformationen, sondern Tiefeninformationen vorhanden, aus welchen relative Stellungen von beweglichen Teilen und/oder Gelenken des zumindest einen gestikulierenden Arms zuverlässig ermittelt werden können.

Bevorzugt werden die Bilddaten von einem Dach des Kraftfahrzeuginnenraums aus ermittelt, das heißt das Kamerasystem, zumindest ein Kamerasensor desselben, ist bevorzugt im Dachhimmel oder Dachknoten angeordnet. Mit Dachknoten ist derjenige Bereich gemeint, in welchem auch beispielsweise der Rückspiegel des Kraftfahrzeugs angeordnet sein kann. Er befindet sich entlang der Kraftfahrzeughochachse üben der Mittelkonsole oder der Schalttafel. Von dieser Perspektive aus ist eine Abschattung einzelner Bereiche eines über der Mittelkonsole gestikulierenden Arms sehr unwahrscheinlich. Damit sind die Gestenerkennung und die Plausibilisierung besonders zuverlässig.

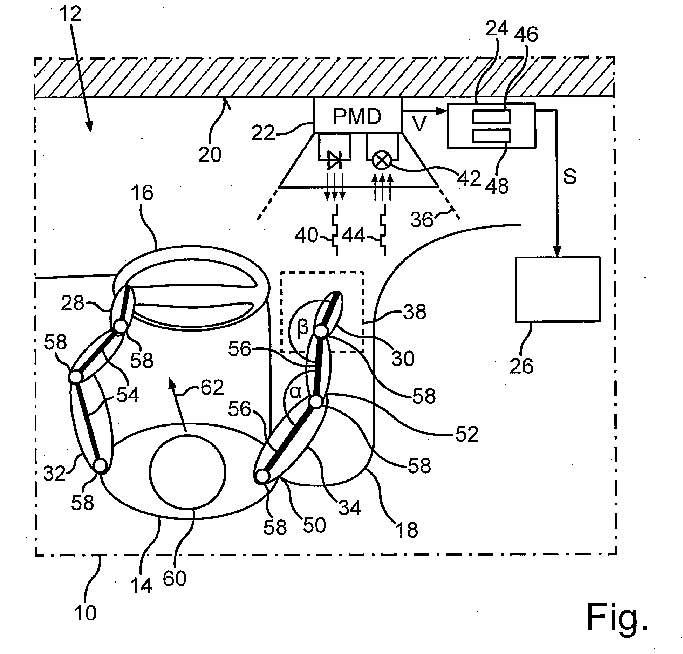

Die Erfindung ist im Folgenden noch einmal anhand eines konkreten Ausführungsbeispiels erläutert. Hierzu zeigt die einzige Figur (Fig.) eine schematische Darstellung einer Ausführungsform des erfindungsgemäßen Kraftfahrzeugs.

In der Fig. ist von einem Kraftfahrzeug 10 ein Fahrzeuginnenraum 12 gezeigt. Bei dem Kraftfahrzeug 10 kann es sich beispielsweise um einen Personenkraftwagen handeln. In dem Fahrzeuginnenraum 12 sitzt auf einem (nicht dargestellten) Fahrersitz ein Fahrer 14. Des Weiteren sind gezeigt: ein Lenkrad 16, eine Mittelkonsole 18 und ein an einer Decke 20 des Fahrzeuginnenraumes 12 angeordnetes Kamerasystem 22. Das Kamerasystem 22 kann mit einer Berechnungseinheit 24 gekoppelt sein. Die Berechnungseinheit 24 kann beispielsweise Bestandteil des Infotainmentsystems oder einer zentralen Recheneinrichtung sein. Des Weiteren weist das Kraftfahrzeug 10 zumindest ein Gerät 26 zum Bereitstellen von Funktionalitäten in dem Kraftfahrzeug 10 auf. Bei dem zumindest einen Gerät 26 kann es sich beispielsweise um ein Infotainmentsystem, eine Steuerung für eine Klimaanlage und/oder ein Telematiksystem handeln. Das zumindest eine Gerät 26 wird bei dem Kraftwagen 10 durch die Berechnungseinheit 24 gesteuert. Die hierzu nötigen Steuerbefehle S werden in Abhängigkeit von den Bediengesten erzeugt, die der Fahrer 14 dazu beispielsweise mit einer seiner Hände 28, 30 oder mit einer der Hände 28, 30 zusammen mit einem der Armgliedmaßen 32, 34 ausführen muss. Um eine vom Fahrer 14 ausgeführte Geste optisch zu erfassen, kann ein optischer Erfassungsbereich 36 des Kamerasystems 22 beispielsweise auf einen Erkennungsbereich 38 gerichtet sein, in welchem der Fahrer 14 diejenigen Gliedmaßen halten muss, mittels welcher er eine Bediengeste ausführen möchte. Der Erkennungsbereich 38 kann beispielsweise einen Teil der Mittelkonsole 18 umfassen.

Das Kamerasystem 22 kann beispielsweise ein PMD-Kamerasystem sein. Es wird dann intensitätsmoduliertes Licht 40 in den Fahrzeuginnenraum 12 ausgestrahlt und dort von in dem Erfassungsbereich 36 befindlichen Objekten zu einem Kamerasensor 42 als reflektiertes Licht 44 zurückgeworfen. Bei dem Licht 40 kann es sich beispielsweise um sichtbares Licht oder um Infrarotlicht handeln. Das Kamerasystem 22 erzeugt aus dem zurückgeworfenen Licht 44 Videodaten V, die an die Berechnungseinheit 24 übertragen werden.

Die Berechnungseinheit 24 weist ein Gestenerkennungsmodul 46 auf. Bei dem Gestenerkennungsmodul 46 kann es sich beispielsweise um ein Programmmodul handeln. Durch das Gestenerkennungsmodul 46 wird anhand der Videodaten V erkannt, welche Bediengeste der Fahrer 14 im Erkennungsbereich 38 beispielsweise mit der Hand ausgeführt hat. Wird eine bestimmte der Bediengesten erkannt, so wird durch das Gestenerkennungsmodul 46 ein entsprechender Steuerbefehl S an das zumindest eine Gerät 26 ausgegeben, welches bei Empfangen des Steuerbefehls S in Abhängigkeit von dem Steuerbefehl S eine vorbestimmte Funktion aktiviert, also beispielsweise mit dem Abspielen eines Musikstücks beginnt oder ein bestimmtes Navigationsziel einstellt.

Bei dem Kraftfahrzeug 10 ist sichergestellt, dass nicht schon dann ein Steuerbefehl S erzeugt wird, wenn der Fahrer 14 zufällig beispielsweise mit der Hand 30 in den Erkennungsbereich 38 eine Bewegung ausführt, weil er sich beispielsweise gerade angeregt mit einem (nicht dargestellten) weiteren Passagier des Kraftfahrzeugs 10 unterhält. Hierzu kann die Berechnungseinheit ein Plausibilisierungsmodul 48 aufweisen. Das Plausibilisierungsmodul 48 kann dazu ausgelegt sein, z.B. anhand der Videodaten V zu überprüfen, ob der Fahrer 14 überhaupt eine Bediengeste ausführen wollte oder eben nur eine Kommunikationsgeste oder eine andere zufällige Handbewegung mit der Hand 30 in dem Erkennungsbereich 38 ausgeführt hat. Das Plausibilisierungsmodul 48 entscheidet dann entweder auf das Vorliegen einer möglichen Bediengeste, so dass durch das Gestenerkennungsmodul 46 ein entsprechender Steuerbefehl S erzeugt werden darf. Entscheidet das Plausibilisierungsmodul 48 dagegen auf eine zu ignorierende Geste, so wird das Erzeugen von Steuerbefehlen S blockiert.

Durch das Plausibilisierungsmodul 48 wird eine Unterscheidbarkeit von artikulationsanalogen Gesten und Bediengesten ermöglicht. Die physikalisch einwandfreie Ortbarkeit des Insassen, also des Fahrers 14, insbesondere durch eine Time-of-Flight-Kamera, also einem PMD-Kamerasystem 22, beziehungsweise von einzelnen Körperteilen 28, 30, 32, 34 des Insassen, erlaubt es, Stellungen der einzelnen Teile 38, 30, 32, 34 und Bewegungen derselben zu erkennen. Durch Evaluation einer bestimmten Geste, die nicht nur auf der Verfolgung beispielsweise eines geometrischen Schwerpunkts der Hand 30 in den Videodaten V beruht, sondern zahlreiche weitere Merkmale (englisch: Features) der bewegten Glieder 28, 30, 32, 34 ermittelt, kann auf einen Gestikulationskontext geschlossen werden, welcher Aufschluss darüber bietet, ob der Fahrer 14 überhaupt gerade einen Bedienwunsch hat, also das Erzeugen eines bestimmten Steuerbefehls S überhaupt beabsichtigt. Die überwachten Merkmale können beispielsweise der Ort, die Geschwindigkeit, die Beschleunigung, die Ruckhaftigkeit der Bewegung und relative Winkel α, β von beweglichen Teilen 28, 30, 32, 34, also beispielsweise des Oberarms bezüglich des Unterarms oder Unterarms bezüglich des Handrückens, sein. Es können also auch Beugewinkel von Gelenken berücksichtigt werden.

Mittels des optischen Sensors 42 vermisst das Kamerasystem 22 den Fahrzeuginnenraum inklusive der darin befindlichen Insassen, also auch des Fahrers 14. Die Berechnungseinheit 24 wertet die Signale mittels des Gestenerkennungsmoduls 46 und des Plausibilisierungsmoduls 48 aus. Die daraus gewonnenen Informationen werden als Steuersignale S zur Reaktion dem Fahrzeug zur Verfügung gestellt, also insbesondere dem Gerät 26. Durch die allgemeine in den Freiheitsgraden begrenzte Positionierung der Insassen, wie des Fahrers 14, im jeweiligen Fahrzeugsitz, kann insbesondere ein Ansatz 50 eines Armgliedes 34 an der Schulter oder auch ein Ansatz 52 eines Unterarmes am Oberarm sehr zuverlässig in den Videodaten V ermittelt werden. Dann kann in ein Armglied 32, 34 beispielsweise ein Skelettmodell 54, 56 hinein modelliert werden und so durch Auswerten von Parametern des Skelettmodells 54 der Ort und/oder die räumliche Ausrichtung beispielsweise der Gelenke 58 verfolgt, ausgewertet und so eine Geste durch das Plausibilisierungsmodul 58 plausibilisiert werden. Während also beispielsweise die Geste allein mit der Hand 30 im Erkennungsbereich 38 auszuführen ist, kann durch den hier räumlichen Kontext, nämlich die Stellung und Ausrichtung des Armgliedes 34, und sogar durch Überprüfung der Stellung des Armgliedes 32 und beispielsweise auch der Ausrichtung des Kopfes 60 bei entsprechender zusätzlicher Beobachtung durch das Plausibilisierungsmodul 48 rückgeschlossen werden, ob der Fahrer 14 einen Bedienwunsch überhaupt hat. Weist beispielsweise eine Flächennormale 62 eines. Gesichts des Fahrers 14 gerade beispielsweise zu einem Seitenspiegel (nicht dargestellt) des Kraftfahrzeugs, so ist es sehr unwahrscheinlich, dass der Fahrer 14 gerade mit seiner Hand 30 eine Bediengeste beispielsweise betreffend das Aktivieren eines Mobiltelefons ausführen möchte. Wird durch das Gestenerkennungsmodul 46 dennoch eine solche Geste erkannt, so kann durch das Plausibilisierungsmodul 48 das Erzeugen eines entsprechenden Steuerbefehls S blockiert werden.

Insgesamt ist mit dem Beispiel gezeigt, wie eine Verminderung von Fehlbedienungen durch ungewollte Gesten erreicht werden kann. Hierdurch ist eine Steigerung der Akzeptanz der Gestenbedienung zu erwarten. Insbesondere durch den Entfall einer ansonsten benötigten Gestenaktivierungstaste kann eine Gestenerkennung nun unauffällig in eine Bedienschnittstelle eines Kraftfahrzeugs 10 integriert werden. Der Entfall der Gestenaktivierungseinrichtung ist durch die zuverlässige Differenzierung zwischen Bediengeste und beispielsweise Kommunikationsgeste ermöglicht.

## Patentansprüche

1. Verfahren zum Betreiben einer Bedienschnittstelle zum Bedienen von zumindest einem Gerät (26) für ein Kraftfahrzeug (10), wobei die Bedienschnittstelle ein Kamerasystem (22) und eine mit dem Kamerasystem (22) gekoppelte Gestenerkennungseinrichtung (46) umfasst und durch das Kamerasystem (22) eine im Kraftfahrzeuginnenraum (12) des Kraftfahrzeugs (10) mit zumindest einem Arm (28, 30, 32, 34) gestikulierende Person (14) gefilmt wird und durch die Gestenerkennungseinrichtung (46) auf der Grundlage von Bilddaten (V) des Kamerasystems (22) Beschreibungsdaten (54, 56) einer Stellung und/oder einer Bewegungsabfolge des zumindest einen gestikulierenden Arms (28, 30, 32, 34) ermittelt und die Beschreibungsdaten (54, 56) einer aus mehreren vorbestimmten Bediengesten durch eine erste Klassifizierung zugeordnet werden,
**dadurch gekennzeichnet, dass**
durch eine Plausibilisierungseinrichtung (48) der Bedienschnittstelle zumindest ein Situationsparameter, welcher einen Gestikulationskontext der Person (14) beschreibt, ermittelt wird und anhand des zumindest einen Situationsparameters durch eine zweite Klassifizierung entschieden wird, ob die Person (14) überhaupt eine mögliche Bediengeste oder nur eine nicht für die Bedienung bestimmte, zu ignorierende Geste ausführt, und bei Entscheidung auf eine mögliche Bediengeste in Abhängigkeit von der durch die erste Klassifizierung erkannten Bediengeste ein Steuerbefehl (S) an das zumindest eine Gerät (26) ausgegeben und bei Entscheidung auf eine zu ignorierende Geste das Ausgeben des Steuerbefehls (S) unterdrückt wird.

2. Verfahren nach Anspruch 1, wobei der zumindest eine Situationsparameter des Gestikulationskontextes eine jeweilige Geschwindigkeit zumindest eines beweglichen Teils (54, 56) und/oder Gelenks (58) des zumindest einen Arms (28, 30, 32, 34) umfasst und auf eine mögliche Bediengeste nur entschieden wird, falls jede Geschwindigkeit innerhalb eines jeweils vorbestimmten Geschwindigkeitswertebereichs liegt.

3. Verfahren nach einem der vorhergehenden Ansprüche, wobei der zumindest eine Situationsparameter des Gestikulationskontextes eine jeweilige Beschleunigung zumindest eines beweglichen Teils (54, 56) und/oder Gelenks (58) des zumindest einen Arms (28, 30, 32, 34) umfasst und auf eine mögliche Bediengeste nur entschieden wird, falls jede Beschleunigung innerhalb eines jeweils vorbestimmten Beschleunigungswertebereichs liegt.

4. Verfahren nach einem der vorhergehenden Ansprüche, wobei der zumindest eine Situationsparameter des Gestikulationskontextes angibt, ob zumindest ein bewegliches Teil (54, 56) und/oder Gelenk (58) des zumindest einen Arms (28, 30, 32, 34) mit einem Ruck bewegt worden ist, durch welchen eine Positionsänderung innerhalb einer vorbestimmten Zeit größer als eine vorbestimmte Höchststrecke ist, und für diesen Fall auf eine zu ignorierende Geste entschieden wird.

5. Verfahren nach einem der vorhergehenden Ansprüche, wobei der zumindest eine Situationsparameter des Gestikulationskontextes einen jeweiligen relativen Winkel (α, β) zumindest eines beweglichen Teils (54, 56) und/oder Gelenks (58) des zumindest einen Arms (28, 30, 32, 34) zu zumindest einen anderen beweglichen Teil (54, 56) und/oder Gelenks (58) umfasst und auf eine mögliche Bediengeste nur entschieden wird, falls jeder relative Winkel (α, β) innerhalb eines jeweils vorbestimmten Winkelwertebereichs liegt.

6. Verfahren nach einem der vorhergehenden Ansprüche, wobei der zumindest eine Situationsparameter des Gestikulationskontextes einen jeweiligen Ort jedes beweglichen Teils (54, 56) und/oder Gelenks (58) des zumindest einen Arms (28, 30, 32, 34) umfasst und auf eine mögliche Bediengeste nur entschieden wird, falls jeder Ort innerhalb eines jeweils vorbestimmten Raumbereichs liegt.

7. Verfahren nach einem der vorhergehenden Ansprüche, wobei das Ausgeben des Steuerbefehls (S) nach dem Starten des Kraftfahrzeugs (10) unabhängig von einer weiteren Betätigung einer dedizierten, jeweils einen einzelnen Erkennungsvorgang auslösenden Gestenaktivierungstaste erzeugt wird.

8. Verfahren nach einem der vorhergehenden Ansprüche, wobei aus einer anhand der Bilddaten (V) ermittelten Bewegungshistorie, welche zeitlich vor einem durch die erste Klassifizierung berücksichtigten Bewegungsablauf des zumindest einen Arms (28, 30, 32, 34) stattgefunden hat, überprüft wird, ob der Gestikulationskontextes überhaupt eine Bediensituation ist, und nur für diesen Fall auf eine Bediengeste entschieden wird.

9. Verfahren nach einem der vorhergehenden Ansprüche, wobei der zumindest eine Situationsparameter des Gestikulationskontextes aus den Bilddaten (V) ermittelt wird.

10. Verfahren nach einem der vorhergehenden Ansprüche, wobei zum Unterdrücken eines bestimmten Steuerbefehls (S) eine zugehörige, zum Auslösen des bestimmten Steuerbefehls (S) auszuführende Bediengeste aus der ersten Klassifizierung ausgenommen wird.

11. Verfahren nach einem der vorhergehenden Ansprüche, wobei die Bilddaten (V) durch zumindest einer der folgenden Einrichtungen des Kraftfahrzeugs (10) ermittelt werden: einer Stereokamera und/oder einer PMD-Kamera (22).

12. Verfahren nach einem der vorhergehenden Ansprüche, wobei in Bilddaten (V) eines optischen Sensors (42) des Kamerasystems (22) ein Körpermodell (54, 56) von zumindest einem Teil der Person (14) eingepasst wird und anhand des Körpermodells (54, 56) einer oder mehrere oder alle Situationsparameter ermittelt werden.

13. Verfahren nach Anspruch 12, wobei zum Ermitteln eines Gestikulationskontextes für mehrere Parameter des Körpermodells (54, 56) jeweils durch ein statistisches Modell einem aktuellen Parameterwert des Parameters ein Wahrscheinlichkeitswert betreffend eine Bedienabsicht der Person (14) zugeordnet wird und auf der Grundlage der Wahrscheinlichkeitswerte aller überprüften Parameter eine Gesamtwahrscheinlichkeit für die Bedienabsicht ermittelt wird und der Steuerbefehl (S) unterdrückt wird, falls die Gesamtwahrscheinlichkeit kleiner als eine vorbestimmte Mindestgeschwindigkeit ist.

14. Bedienschnittstelle zum Bedienen von zumindest einem Gerät (26) für ein Kraftfahrzeug (10), wobei die Bedienschnittstelle ein Kamerasystem (22) und eine mit dem Kamerasystem (22) gekoppelte Gestenerkennungseinrichtung (46) umfasst und das Kamerasystem (22) dazu ausgelegt ist, eine im Fahrzeuginnenraum (12) des Kraftfahrzeugs (10) mit zumindest einem Arm (28, 30, 32, 34) gestikulierende Person (14) zu filmen, und die Gestenerkennungseinrichtung dazu ausgelegt ist, auf der Grundlage von Bilddaten (V) des Kamerasystems (22) eine Stellung und/oder Bewegungsabfolge des zumindest einen gestikulierenden Arms (28, 30, 32, 34) zu ermitteln und als eine aus mehreren vorbestimmten Bediengesten zu klassifizieren und in Abhängigkeit von der durch die Klassifizierung erkannten Bediengeste einen Steuerbefehl (S) an das zumindest eine Gerät auszugeben,
**dadurch gekennzeichnet, dass**
die Bedienschnittstelle eine Plausibilisierungseinrichtung (48) aufweist und die Bedienschnittstelle dazu ausgelegt ist, ein Verfahren nach einem der vorhergehenden Ansprüche durchzuführen.

15. Kraftfahrzeug (10) mit einer Bedienschnittstelle nach Anspruch 14.

## Claims

1. Method for actuating an operating interface to operate at least one device (26) for a vehicle (10), wherein the operating interface comprises a camera system (22) and a gesture recognition device (46) coupled to the camera system (22) and an individual (14) gesturing in the vehicle interior (12) of the vehicle (10) using at least one arm (28, 30, 32, 34) is filmed by the camera system (22) and descriptive data (54, 56) of a position and/or a movement sequence of the at least one gesturing arm (28, 30, 32, 34) is determined by the gesture recognition device (46) based on image data (V) of the camera system (22) and the descriptive data (54, 56) are assigned to one of a plurality of predetermined operating gestures by a first classification, **characterised in that**
at least one situation parameter is determined by a plausibility device (48) of the operating interface, said situation parameter describing a gesturing context of the individual (14) and a decision is made by a second classification on the basis of the at least one situation parameter whether the individual (14) even performs a possible operating gesture or merely a gesture not intended for the operation and which should be ignored and upon deciding based on a possible operating gesture a control command (S) is issued to the at least one device (26) depending on the operating gesture recognised by the first classification and upon deciding based on a gesture to be ignored, the issuance of the control command (S) is stopped.

2. Method according to claim 1, wherein the at least one situation parameter of the gesturing context comprises a respective speed of at least one movable part (54, 56) and/or joint (58) of the at least one arm (28, 30, 32, 34) and a decision is only made based on a possible operating gesture, if each speed is within a respectively predetermined speed value range.

3. Method according to any one of the preceding claims, wherein the at least one situation parameter of the gesturing context comprises a respective acceleration of at least one movable part (54, 56) and/or joint (58) of the at least one arm (28, 30, 32, 34) and a decision is only made based on a possible operating gesture if each acceleration is within a respectively predetermined acceleration value range.

4. Method according to any one of the preceding claims, wherein the at least one situation parameter of the gesturing context indicates whether at least one movable part (54, 56) and/or joint (58) of the at least one arm (28, 30, 32, 34) has been moved with a jerk by means of which a positional change within a predetermined time is greater than a predetermined maximum distance and a decision is made for this case based on a gesture to be ignored.

5. Method according to any one of the preceding claims, wherein the at least one situation parameter of the gesturing context comprises a respective relative angle (α, β) of at least one movable part (54, 56) and/or joint (58) of the at least one arm (28, 30, 32, 34) to at least one other movable part (54, 56) and/or joint (58) and a decision is only made based on a possible operating gesture if each relative angle (α, β) is within a respectively predetermined angle value range.

6. Method according to any one of the preceding claims, wherein the at least one situation parameter of the gesturing context comprises a respective location of each movable part (54, 56) and/or joint (58) of at least one arm (28, 30, 32, 34) and a decision is only made based on a possible operating gesture if each location is within a respectively predetermined spatial range.

7. Method according to any one of the preceding claims, wherein the issuance of the control command (S) is generated after starting the motor vehicle (10) independently of an additional actuation of a dedicated gesture activation button triggering an individual recognition process.

8. Method according to any one of the preceding claims, wherein using movement history determined based on image data (V), said movement history having taken place before a movement sequence of the at least one arm (28, 30, 32, 34) considered by the first classification, it is verified whether the gesturing context is even an operating situation and a decision is only made for this case based on an operating gesture.

9. Method according to any one of the preceding claims, wherein the at least one situation parameter of the gesturing context is determined from the image data (V).

10. Method according to any one of the preceding claims, wherein an assigned operating gesture to be performed to trigger the determined control command (S) is excluded from the first classification to stop a determined control command (S).

11. Method according to any one of the preceding claims, wherein the image data (V) are determined by at least one of the following devices of the motor vehicle (10): a stereo camera and/or a PMD camera (22).

12. Method according to any one of the preceding claims, wherein a body model (54, 56) of at least one part of the individual (14) is fitted into image data (V) of an optical sensor (42) of the camera system (22) and one or a plurality or all situation parameters are determined based on the body model (54, 56).

13. Method according to claim 12, wherein a probability value concerning an operating intention of the individual (14) is assigned to a current parameter value of the parameter in order to respectively determine a gesturing context for a plurality of parameters of the body model (54, 56) by way of a statistical model and an overall probability for the operating intention is determined based on the probability values of all verified parameters and the control command (S) is stopped if the overall probability is lower than a predetermined minimum speed.

14. Operating interface for operating at least one device (26) for a motor vehicle (10), wherein the operating interface comprises a camera system (22) and a gesture recognition device (46) coupled to the camera system (22) and the camera system (22) is configured to film an individual (14) gesturing in the vehicle interior (12) of the motor vehicle (10) using at least one arm (28, 30, 32, 34) and the gesture recognition device is configured to determine a position and/or movement sequence of the at least one gesturing arm (28, 30, 32, 34) based on image data (V) of the camera system (22) and to classify it as one of a plurality of predetermined operating gestures and to issue a control command (S) to the at least one device depending upon the operating gesture recognised by the classification, **characterised in that** the operating interface has a plausibility device (48) and the operating interface is configured to carry out a method according to any one of the preceding claims.

15. Motor vehicle (10) having an operating interface according to claim 14.

## Revendications

1. Procédé de fonctionnement d'une interface de commande destinée à commander au moins un appareil (26) pour un véhicule automobile (10),
dans lequel l'interface de commande comprend un système de caméra (22) et un dispositif de reconnaissance de geste (46) couplé au système de caméra (22) et, par le système de caméra (22), une personne (14) bougeant au moins un bras (28, 30, 32, 34) dans l'habitacle de véhicule automobile (12) du véhicule automobile (10) est filmée et, par le dispositif de reconnaissance de gestes (46), des données descriptives (54, 56) d'une position et/ou d'une séquence de mouvement de l'au moins un bras bougeant (28, 30, 32, 34) sont déterminées sur la base de données vidéo (V) du système de caméra (22) et les données descriptives (54, 56) sont associées par une première classification à un geste de commande parmi plusieurs gestes de commande prédéterminés,
**caractérisé en ce que**, par un dispositif de vraisemblance (48) de l'interface de commande, au moins un paramètre de situation qui décrit un contexte gestuel de la personne (14) est déterminé et, à l'aide de l'au moins un paramètre de situation, on décide par une deuxième classification si la personne (14) fait ou non un éventuel geste de commande ou seulement un geste qui n'est pas destiné à la commande et qui doit être ignoré et, dans le cas d'une décision pour un geste de commande éventuel, une instruction de commande (S) est délivrée à l'au moins un appareil (26) en fonction du geste de commande reconnu par la première classification et, dans le cas d'une décision pour un geste à ignorer, la délivrance de l'instruction de commande (S) est bloquée.

2. Procédé selon la revendication 1, dans lequel l'au moins un paramètre de situation du contexte gestuel comprend une vitesse respective au moins d'une partie mobile (54, 56) et/ou d'une articulation (58) de l'au moins un bras (28, 30, 32, 34) et on ne conclut à un geste de commande éventuel que si ladite vitesse se situe dans une plage de valeur de vitesse respectivement prédéterminée.

3. Procédé selon l'une des revendications précédentes, dans lequel l'au moins un paramètre de situation du contexte gestuel comprend une accélération respective au moins d'une partie mobile (54, 56) et/ou d'une articulation (58) de l'au moins un bras (28, 30, 32, 34) et on ne conclut à un geste de commande éventuel que si ladite accélération se situe dans une plage de valeur d'accélération respectivement prédéterminée.

4. Procédé selon l'une des revendications précédentes, dans lequel l'au moins un paramètre de situation du contexte gestuel indique si au moins une partie mobile (54, 56) et/ou une articulation (58) de l'au moins un bras (28, 30, 32, 34) a été déplacée avec un à-coup par lequel une variation de position dans les limites d'un temps prédéterminé est supérieure à une distance maximale prédéterminée et, dans ce cas, on conclut à un geste à ignorer.

5. Procédé selon l'une des revendications précédentes, dans lequel l'au moins un paramètre de situation du contexte gestuel comprend un angle relatif respectif (α, β) au moins d'une partie mobile (54, 56) et/ou d'une articulation (58) de l'au moins un bras (28, 30, 32, 34) par rapport à au moins une autre partie mobile (54, 56) et/ou articulation (58) et on ne conclut à un geste de commande éventuel que si ledit angle relatif (α, β) se situe à l'intérieur d'une plage de valeur d'angle respectivement prédéterminée.

6. Procédé selon l'une des revendications précédentes, dans lequel l'au moins un paramètre de situation du contexte gestuel comprend un emplacement respectif de la partie mobile (54, 56) et/ou articulation (58) de l'au moins un bras (28, 30, 32, 34) et on ne conclut à un geste de commande éventuel que si ledit emplacement se situe à l'intérieur d'une zone spatiale respectivement prédéterminée.

7. Procédé selon l'une des revendications précédentes, dans lequel la délivrance de l'instruction de commande (S) après le démarrage du véhicule automobile (10) est générée en fonction d'un autre actionnement d'une touche d'activation de geste spécifique déclenchant à chaque fois une opération de reconnaissance individuelle.

8. Procédé selon l'une des revendications précédentes, dans lequel, à partir d'un historique de mouvements qui a été déterminé à l'aide des données vidéo (V) et qui a eu lieu chronologiquement avant une séquence de mouvement, prise en compte par la première classification, de l'au moins un bras (28, 30, 32, 34), on vérifie si le contexte gestuel est ou non une situation de commande et, seulement dans le cas d'une situation de commande, on conclut à un geste de commande.

9. Procédé selon l'une des revendications précédentes, dans lequel l'au moins un paramètre de situation du contexte gestuel est déterminé à partir des données vidéo (V).

10. Procédé selon l'une des revendications précédentes, dans lequel, pour bloquer une instruction de commande (S) déterminée, on enlève de la première classification un geste de commande associé à exécuter pour déclencher l'instruction de commande (S) déterminée.

11. Procédé selon l'une des revendications précédentes, dans lequel les données vidéo (V) sont déterminées par au moins l'un des dispositifs suivants du véhicule automobile (10) : une caméra stéréo et/ou une caméra PMD (22).

12. Procédé selon l'une des revendications précédentes, dans lequel, dans des données vidéo (V) d'un capteur optique (42) du système de caméra (22), un modèle de corps (54, 56) d'au moins une partie de la personne (14) est adapté et, à l'aide du modèle de corps (54, 56), un ou plusieurs ou tous les paramètres de situation sont déterminés.

13. Procédé selon la revendication 12, dans lequel, pour déterminer un contexte gestuel pour plusieurs paramètres du modèle de corps (54, 56), on associe à chaque fois via un modèle statistique une valeur de vraisemblance portant sur une intention de commande de la personne (14) à une valeur de paramètre actuelle du paramètre et, sur la base des valeurs de vraisemblance de tous les paramètres vérifiés, on détermine une vraisemblance globale pour l'intention de commande et on bloque l'instruction de commande (S) si la vraisemblance globale est inférieure à une vitesse minimale prédéterminée.

14. Interface de commande en vue de la commande d'au moins un appareil (26) pour un véhicule automobile (10),
dans laquelle l'interface de commande comprend un système de caméra (22) et un dispositif de reconnaissance de geste (46) couplé à un système de caméra (22) et le système de caméra (22) est conçu pour filmer une personne (14) bougeant au moins un bras (28, 30, 32, 34) dans l'habitacle de véhicule automobile (12) du véhicule automobile (10) et le dispositif de reconnaissance de gestes est conçu pour déterminer une position et/ou une séquence de mouvement de l'au moins un bras bougeant (28, 30, 32, 34) sur la base de données vidéo (V) du système de caméra (22) et pour la classer comme un geste de commande parmi plusieurs gestes de commande prédéterminés et pour délivrer une instruction de commande (S) à l'au moins un appareil en fonction des gestes de commande reconnus par la classification,
**caractérisée en ce que** l'interface de commande comporte un dispositif de vraisemblance (48) et l'interface de commande est conçue pour mettre en oeuvre un procédé selon l'une des revendications précédentes.

15. Véhicule automobile (10) avec une interface de commande selon la revendication 14.
